# EUROPEAN PATENT APPLICATION

(11) **EP 4 502 719 A1**
(43) Date of publication of application: **05.02.2025**
(21) Application number: 23781399.3
(22) Date of filing: 30.03.2023
(51) Int. Cl.: G02F 1/1333, G02F 1/1339, G02F 1/1337, G02F 1/1343, B60J 3/04

(54) **LIQUID CRYSTAL CELL AND OPTICAL DEVICE**

(30) Priority: 30.03.2022 KR 20220039632
(71) Applicant: LG Chem, Ltd., Yeongdeungpo-gu Seoul 07336 (KR)
(72) Inventor: KIM, Jung Woon, Daejeon 34122 (KR); YOU, Jung Sun, Daejeon 34122 (KR); HUH, Doo Young, Daejeon 34122 (KR); LEE, Beom Jin, Daejeon 34122 (KR); OH, Dong Hyun, Daejeon 34122 (KR)
(74) Representative: Goddar, Heinz J.
(86) International application number: PCT/KR2023/004293
(87) International publication number: WO 2023/191548

(57) **Abstract**

The present application relates to a liquid crystal cell and an optical device. The liquid crystal cell and optical device of the present application can properly maintain a cell gap of a liquid crystal element, have excellent adhesion between an upper substrate and a lower substrate, and solve the pressing and liquid crystal overflow problems capable of occurring during the bonding process of an outer substrate due to the delamination capable of occurring in the post-electrode process.

## Description

### [Technical Field]

The present application relates to a liquid crystal cell and an optical device.

The present application claims the benefit of priority based on Korean Patent Application No. 10-2022-0039632 dated March 30, 2022, the disclosure of which is incorporated herein by reference in its entirety.

### [Background Art]

For long-term stability and large-area scalability of a liquid crystal film cell using flexible substrates, it is important that a cell gap is maintained between upper and lower substrates and adhesion force is imparted between the upper and lower substrates.

In Non-Patent Document 1 ("Tight Bonding of Two Plastic Substrates for Flexible LCDs" SID Symposium Digest, 38, pp. 653-656 (2007)), a technique for forming an organic film pattern in the form of a column or wall with a cell gap height on one substrate and fixing it to the opposite substrate using an adhesive is disclosed. However, in such a technique, the adhesive must be located only on the column surface or wall surface, but the technique of micro-stamping the adhesive on the column surface or wall surface has high process difficulty; the control of the adhesive thickness and area is difficult; upon lamination of the upper and lower substrates, there is a high probability that the adhesive will be pushed out; and there is a risk that the adhesive may be contaminated into the alignment film or liquid crystal.

### [Disclosure]

### [Technical Problem]

In order that the cell gap of the liquid crystal cell is maintained and the attachment force is secured between the upper substrate and the lower substrate, it may be considered that a spacer and an alignment film are formed on the lower substrate and a pressure-sensitive adhesive layer having liquid crystal orientation force and adhesion force is formed on the upper substrate, followed by lamination. However, in the liquid crystal cell, the liquid crystals are filled between the pressure-sensitive adhesive layer and the spacer, but due to the liquid crystal contamination at the interface between the pressure-sensitive adhesive layer and the spacer, the adhesive strength between the region with liquid crystals and the region without any liquid crystal shows a significant difference, and due to the low adhesive strength, problems such as delamination are caused in the post-electrode process. **In** addition, during the process of bonding the outer substrate to both sides of the liquid crystal cell, pressing due to the delamination phenomenon and an overflow phenomenon due to residual liquid crystals at the interface, and the like may occur.

It is an object of the present application to provide a liquid crystal cell and an optical device, which can properly maintain a cell gap of a liquid crystal cell, have excellent adhesion between an upper substrate and a lower substrate, and solve the pressing and liquid crystal overflow problems capable of occurring during the bonding process of an outer substrate due to the delamination capable of occurring in the post-electrode process.

### [Technical Solution]

Among the physical properties mentioned in this specification, when the measurement temperature affects the result, the relevant physical property is a physical property measured at room temperature, unless otherwise specified. The term room temperature is a natural temperature without warming or cooling, which is usually one temperature in a range of about 10°C to 30°C or a temperature of about 23°C or about 25°C or so. Also, in this specification, unless otherwise specified, the unit of temperature is °C. Among the physical properties mentioned in this specification, when the measurement pressure affects the result, the relevant physical property is a physical property measured at normal pressure, unless otherwise specified. The term normal pressure is a natural pressure without pressurization or depressurization, which refers to about 1 atm or so as the normal pressure.

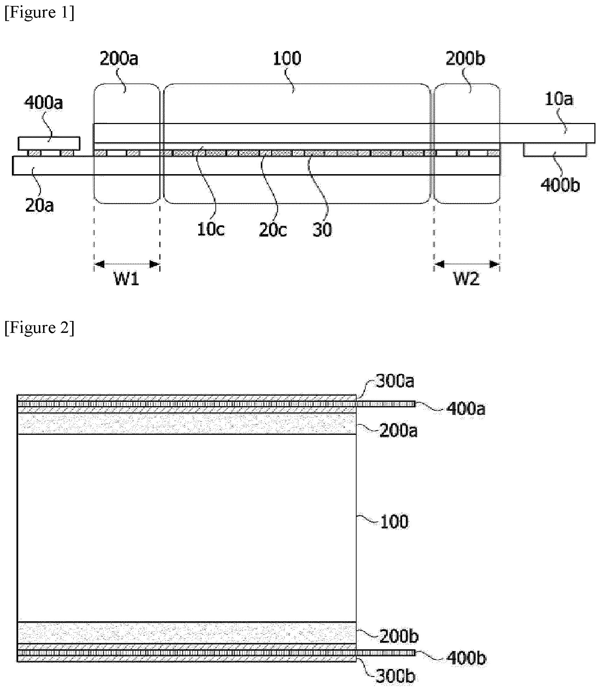

The present application relates to a liquid crystal cell. Figure 1 exemplarily shows a liquid crystal cell of the present application. The liquid crystal cell comprises an upper substrate including a first base layer (10a) and a pressure-sensitive adhesive layer (10c), and a lower substrate including a second base layer (20a) and spacers (20c), wherein the region between the upper substrate and the lower substrate may be divided into a liquid crystal region (100) containing a liquid crystal compound (30) and non-liquid crystal regions (200a, 200b) containing no liquid crystal compound (30).

The non-liquid crystal region may be filled with air. The non-liquid crystal region may be used as a bezel part of the liquid crystal cell. The liquid crystal cell of the present application may secure processability of the liquid crystal cell by controlling a width of the non-liquid crystal region, and may control defects during the bonding process of the outer substrate. The width (W1 or W2) of the non-liquid crystal region may be 4 mm or more. Since the adhesion between the upper substrate and the lower substrate is poor in the region where liquid crystals exist between the upper substrate and the lower substrate, such defects may easily occur. According to the present invention, by securing the width of the non-liquid crystal region in a predetermined range or more, proper adhesion between the upper substrate and the lower substrate of the liquid crystal cell can be secured, thereby solving the problems of the present invention. The width (W1 or W2) of the non-liquid crystal region may be, specifically, 5 mm or more, 6 mm or more, 7 mm or more, 8 mm or more, 9 mm or more, or 10 mm or more. When the widths (W1, W2) of the non-liquid crystal regions are within the above range, it is possible to solve the pressing and overflow defects of the liquid crystals capable of occurring during the bonding process of the outer substrate due to the delamination capable of occurring during the post-electrode process. The width (W1 or W2) of the non-liquid crystal region may be, for example, 200 mm or less, 180 mm or less, 160 mm or less, 140 mm or less, 120 mm or less, 100 mm or less, 80 mm or less, 60 mm or less, 40 mm or less, 20 mm or less, or 15 mm or less.

The length of the non-liquid crystal region and the length of the liquid crystal region may be substantially equal to the length of the second base layer in the longitudinal direction. In one example, the difference (L₁-L₂) between the length (L₁) of the non-liquid crystal region and the length (L₂) of the liquid crystal region may be, for example, 10 mm or less, 5 mm or less, 3 mm or less, or 1 mm or less.

The non-liquid crystal region may have a line shape extending in a first direction. The first direction may be a longitudinal (horizontal) direction of the first base layer and/or the second base layer. In this specification, the longitudinal direction of the first base layer and/or the second base layer may mean a direction parallel to the longest side among the sides constituting the polygon when the plane of the first base layer and/or the second base layer has a polygonal shape. When the lengths of all sides constituting the polygon are the same, it may mean a direction parallel to an arbitrary side among the sides constituting the polygon. **In** one example, the plane of the first base layer and/or the second base layer may have a quadrangular shape, more specifically a rectangular shape. **In** one example, when the plane of the first base layer and/or the second base layer is a rectangle, the first direction may mean the horizontal direction of the rectangle.

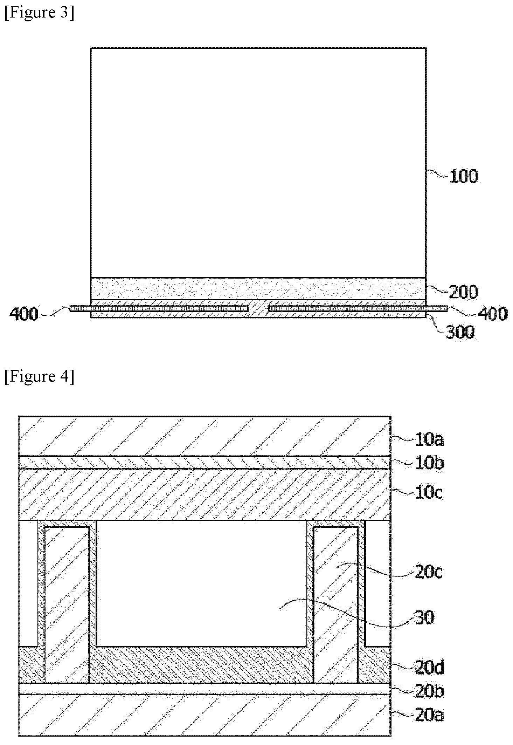

The non-liquid crystal region may be located on the side surface of the liquid crystal region. The non-liquid crystal region may be located on both side surfaces of the liquid crystal region or on one side surface of the liquid crystal region. Figures 2 and 3 each exemplarily show a structure of a liquid crystal cell observed from above. That is, Figures 2 and 3 exemplarily show a structure in which the liquid crystal cell is placed so that the lower substrate touches the bottom, and observed from the upper substrate side.

Figure 2 exemplarily shows a liquid crystal cell in which non-liquid crystal regions (200a, 200b) are located on both side surfaces of the liquid crystal region (100). As shown in Figure 2, the non-liquid crystal regions may be located on the first side surface and the second side surface of the liquid crystal region. When observing the liquid crystal cell from the top, the first non-liquid crystal region (200a), the liquid crystal region (100), and the second non-liquid crystal region (200b) may sequentially exist. At this instance, the non-liquid crystal region (200a) located on the first side surface of the liquid crystal region (100) and the non-liquid crystal region (200b) located on the second side surface of the liquid crystal region (100) may not contact each other. At this instance, the non-liquid crystal region (200a) located on the first side surface of the liquid crystal region (100) and the non-liquid crystal region (200b) located on the second side surface of the liquid crystal region (100) may be parallel to each other. The widths of the non-liquid crystal region (200a) and the non-liquid crystal region (200b) may each be within the above range. In one example, the non-liquid crystal region (200a) and the non-liquid crystal region (200b) may have the same width.

Figure 3 exemplarily shows a liquid crystal cell in which the non-liquid crystal region (200) is located on one side surface of the liquid crystal region (100). As shown in Figure 3, the non-liquid crystal region may be located on only any one side surface of the liquid crystal region. When observing the liquid crystal cell from the top, the liquid crystal region (100) and the non-liquid crystal region (200) may sequentially exist.

The method of forming the liquid crystal region and the non-liquid crystal region between the upper substrate and the lower substrate is not particularly limited, where for example, a method of forming, on the lower substrate, a liquid crystal layer in the region corresponding to the liquid crystal region, and forming no liquid crystal layer in the region corresponding to the non-liquid crystal region, and then bonding the upper substrate may be used.

The liquid crystal cell may be laminated in a state where the upper substrate and the lower substrate are alternately disposed. For example, as shown in Figure 1, the region where only one of the upper substrate and the lower substrate exists may exist on the side surface of the non-liquid crystal region. Conductive tapes (400a, 400b) extending in the first direction may be formed on any one of the substrates. Figure 2 exemplarily shows a region (300a) where only any one of the upper and lower substrates exists and a region (300b) where only the other one of the upper and lower substrates exists at both ends of the liquid crystal cell, respectively. At this instance, the region where only the upper substrate exists at the end of the liquid crystal cell may be referred to as a region where the upper substrate is exposed, and the region where only the lower substrate exists at the end of the liquid crystal cell may be referred to as a region where the lower substrate is exposed.

Figure 1 exemplarily shows a structure including both regions 300a and 300b. Meanwhile, Figure 3 exemplarily shows a region (300) where only one of the upper substrate and the lower substrate exists at one end of the liquid crystal cell. In this case, the conductive tape (400) may be formed on the region (300). The conductive tape may serve to energize the liquid crystal cell so that it may be uniformly driven. The width of the conductive tape may be in a range of 1 mm to 200 mm, for example.

Figure 4 shows the liquid crystal area of the liquid crystal cell, thereby specifically showing the configuration of the liquid crystal cell. In relation to the non-liquid crystal region of the liquid crystal cell, and the region where the upper substrate is exposed and/or the region where the lower substrate is exposed, matters related to the first base layer, the first electrode layer, the pressure-sensitive adhesive layer, the second base layer, the second electrode layer, the spacer, and the alignment film below may be equally applied.

As described above, the upper substrate of the liquid crystal cell may comprise the first base layer (10a), and the lower substrate may comprise the second base layer (20a).

As the first base layer and the second base layer, for example, an inorganic film such as a glass film, a crystalline or amorphous silicon film or a quartz or ITO (indium tin oxide) film, or a polymer film, and the like may be used, and in terms of implementation of flexible elements, the polymer film may be used.

In one example, each of the first base layer and the second base layer may be a polymer film. As the polymer film, TAC (triacetyl cellulose); COPs (cyclo olefin copolymers) such as norbornene derivatives; PMMA (poly(methyl methacrylate); PC (polycarbonate); PE (polyethylene); PP (polypropylene); PVA (polyvinyl alcohol); DAC (diacetyl cellulose); Pac (polyacrylate); PES (poly ether sulfone); PEEK (polyetheretherketon); PPS (polyphenylsulfone), PEI (polyetherimide); PEN (polyethylenenaphthatlate); PET (polyethyleneterephtalate); PI (polyimide); PSF (polysulfone); PAR (polyarylate) or an amorphous fluororesin, and the like may be used, without being limited thereto. In the first base layer and the second base layer, a coating layer of gold, silver or a silicon compound such as silicon dioxide or silicon monoxide, or a functional layer such as an antireflection layer may also be present as needed.

The thicknesses of the first base layer and the second base layer may each be about 10 µm to about 1,000 µm. As another example, the thicknesses of the first base layer and the second base layer may each be about 20 µm or more, 40 µm or more, 60 µm or more, 80 µm or more, 100 µm or more, 120 µm or more, 140 µm or more, 160 µm or more, or about 180 µm or more, and may be about 900 µm or less, 800 µm or less, 700 µm or less, 600 µm or less, 500 µm or less, or about 400 µm or less. When the thicknesses of the first base layer and the second base layer satisfy the above range, it may be advantageous to reduce appearance defects such as wrinkles at the time of manufacturing an optical device by laminating the liquid crystal cell with outer substrates.

In the upper substrate, the pressure-sensitive adhesive layer (20c) may be present on the inner side surface of the first base layer (10a). In this specification, the "inner side surface" of the constitution included in a liquid crystal cell may mean a surface facing the liquid crystal layer (layer in which the liquid crystal compound is present).

In one example, the storage elastic modulus of the pressure-sensitive adhesive layer at a temperature of 25°C and a frequency of 1Hz may be in a range of 0.2 MPa to 10 MPa. Specifically, the storage elastic modulus of the pressure-sensitive adhesive layer may be 0.3 MPa or more or 0.5 MPa or more, and may be 8 MPa or less, 6 MPa or less, 4 MPa or less, or 2 MPa or less. In one example, the loss elastic modulus of the pressure-sensitive adhesive layer at a temperature of 25°C and a frequency of 1Hz may be in a range of 0.5 MPa to 2 MPa. The loss elastic modulus of the pressure-sensitive adhesive layer may be specifically 0.6 MPa or more, 0.7 MPa or more, or 0.8 MPa or more, and may be 1.8 MPa or less, 1.6 MPa or less, 1.4 MPa or less, or 1.2 MPa or less. If the elastic modulus of the pressure-sensitive adhesive layer inside the liquid crystal cell is too low, it may be difficult to maintain the cell gap of the liquid crystal cell, and if the elastic modulus of the pressure-sensitive adhesive layer inside the liquid crystal cell is too high, it may be difficult to impart a pressure-sensitive adhesive effect, so that it may be advantageous that the elastic modulus may be in the above range. In one example, the storage elastic modulus of the pressure-sensitive adhesive layer may have a lower value than the loss elastic modulus.

The pressure-sensitive adhesive layer may be optically transparent. The pressure-sensitive adhesive layer may have average transmittance of about 80% or more, 85% or more, 90% or more, or 95% or more for the visible light region, for example, a wavelength of 380 nm to 780 nm.

The pressure-sensitive adhesive layer may be a liquid crystal orientational pressure-sensitive adhesive layer. The pressure-sensitive adhesive layer may be, for example, a vertically orientational pressure-sensitive adhesive layer or a horizontally orientational pressure-sensitive adhesive layer. In this specification, the "vertically orientational pressure-sensitive adhesive" may mean a pressure-sensitive adhesive having attachment force capable of boding the upper substrate and the lower substrate while imparting vertical orientation force to the adjacent liquid crystal compound. In this specification, the "horizontally orientational pressure-sensitive adhesive" may mean a pressure-sensitive adhesive having attachment force capable of bonding the upper substrate and the lower substrate while imparting horizontal orientation force to the adjacent liquid crystal compound. The pretilt angle of the adjacent liquid crystal compound with respect to the vertically orientational pressure-sensitive adhesive may be in a range of 80 degrees to 90 degrees, 85 degrees to 90 degrees or about 87 degrees to 90 degrees, and the pretilt angle of the adjacent liquid crystal compound with respect to the horizontally orientational pressure-sensitive adhesive may be in a range of 0 degrees to 10 degrees, 0 degrees to 5 degrees or 0 degrees to 3 degrees.

In this specification, the pretilt angle may mean an angle formed by a director of a liquid crystal compound with respect to a plane horizontal to a liquid crystal orientational pressure-sensitive adhesive or an alignment film in a state where no voltage is applied. In this specification, the director of the liquid crystal compound may mean the optical axis or the slow axis of the liquid crystal layer. Alternatively, the director of the liquid crystal compound may mean a long axis direction when the liquid crystal compound has a rod shape, and may mean an axis parallel to the normal direction of the disk plane when the liquid crystal compound has a discotic shape.

The thickness of the pressure-sensitive adhesive layer may be, for example, in a range of 3 µm to 15 µm. When the thickness of the pressure-sensitive adhesive layer is within the above range, it may be advantageous to minimize defects such as pressing or crowding of the pressure-sensitive adhesive when used in the manufacture of a liquid crystal cell, while securing attachment force between the upper substrate and the lower substrate.

As the pressure-sensitive adhesive layer, various types of pressure-sensitive adhesives known in the industry as a so-called OCA (optically clear adhesive) may be appropriately used. The pressure-sensitive adhesive may be different from an OCR (optically clear resin) type adhesive which is cured after the object to be attached is bonded in that it is cured before the object to be attached is bonded. As the pressure-sensitive adhesive, for example, an acrylic, silicone-based, epoxy-based, or urethane-based pressure-sensitive adhesive may be applied.

The pressure-sensitive adhesive layer may comprise a cured product of a pressure-sensitive adhesive resin. In one example, the pressure-sensitive adhesive layer may comprise a silicone-based pressure-sensitive adhesive. The silicone-based pressure-sensitive adhesive may comprise a cured product of a curable silicone compound as the pressure-sensitive adhesive resin.

The type of the curable silicone compound is not particularly limited, and for example, a heat-curable silicone compound or an ultraviolet-curing silicone compound may be used. The curable silicone compound may be referred to as the pressure-sensitive adhesive resin.

In one example, the curable silicone compound may be an addition-curing silicone compound.

Specifically, the addition-curing silicone compound may be exemplified by (1) an organopolysiloxane containing two or more alkenyl groups in the molecule and (2) an organopolysiloxane containing two or more silicon-bonded hydrogen atoms in the molecule, but is not limited thereto. Such a silicone compound can form a cured product by an addition reaction, for example, in the presence of a catalyst to be described below.

A more specific example of the (1) organopolysiloxane, which can be used in the present application, may include a dimethylsiloxane-methylvinylsiloxane copolymer blocking with trimethylsiloxane groups at both ends of the molecular chain, a methylvinylpolysiloxane blocking with trimethylsiloxane groups at both ends of the molecular chain, a dimethylsiloxane-methylvinylsiloxane-methylphenylsiloxane copolymer blocking with trimethylsiloxane groups at both ends of the molecular chain, a dimethylpolysiloxane blocking with dimethylvinylsiloxane groups at both ends of the molecular chain, a methyl vinylpolysiloxane blocking with dimethylvinylsiloxane groups at both ends of the molecular chain, a dimethylsiloxane-methylvinylsiloxane copolymer blocking with dimethylvinylsiloxane groups at both ends of the molecular chain, a dimethylsiloxane-methylvinylsiloxane-methylphenylsiloxane copolymer blocking with dimethylvinylsiloxane groups at both ends of the molecular chain, an organopolysiloxane copolymer comprising a siloxane unit represented by R¹₂SiO_{1/2} and a siloxane unit represented by R¹₂R²SiO_{1/2} and a siloxane unit represented by SiO_{4/2}, an organopolysiloxane copolymer comprising a siloxane unit represented by R¹₂R²SiO_{1/2} and a siloxane unit represented by SiO_{4/2}, an organopolysiloxane copolymer comprising a siloxane unit represented by R¹R²SiO_{2/2} and a siloxane unit represented by R¹SiO_{3/2} or a siloxane unit represented by R²SiO_{3/2}, and a mixture of two or more of the foregoing, but is limited thereto. Here, R¹ is a hydrocarbon group other than an alkenyl group, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenentyl group; a halogen-substituted alkyl group such as a chloromethyl group, a 3-chloropropyl group, or a 3,3,3-trifluoropropyl group, and the like. In addition, here, R² is an alkenyl group, which may be, specifically, a vinyl group, an allyl group, a butenyl group, a pentenyl group, a hexenyl group or a heptenyl group, and the like.

A more specific example of the (2) organopolysiloxane, which can be used in the present application, may include a methylhydrogenpolysiloxane blocking with trimethylsiloxane groups at both ends of the molecular chain, a dimethylsiloxanemethylhydrogen copolymer blocking with trimethylsiloxane groups at both ends of the molecular chain, a dimethylsiloxane-methylhydrogensiloxane-methylphenylsiloxane copolymer blocking with trimethylsiloxane groups at both ends of the molecular chain, a dimethylpolysiloxane blocking with dimethylhydrogensiloxane groups at both ends of the molecular chain, a dimethylsiloxane-methylphenylsiloxane copolymer blocking with dimethylhydrogensiloxane groups at both ends of the molecular chain, a methylphenylpolysiloxane blocking with dimethylhydrogensiloxane groups at both ends of the molecular chain, an organopolysiloxane copolymer comprising a siloxane unit represented by R¹₃SiO_{1/2}, a siloxane unit represented by R¹₂HSiO_{1/2} and a siloxane unit represented by SiO_{4/2}, an organopolysiloxane copolymer comprising a siloxane unit represented by R¹₂HSiO_{1/2} and a siloxane unit represented by SiO_{4/2}, an organopolysiloxane copolymer comprising a siloxane unit represented by R¹HSiO_{2/2} and a siloxane unit represented by R¹SiO_{3/2} or a siloxane unit represented by HSiO_{3/2} and a mixture of two or more of the foregoing, but is not limited thereto. Here, R¹ is a hydrocarbon group other than an alkenyl group, which may be, specifically, an alkyl group such as a methyl group, an ethyl group, a propyl group, a butyl group, a pentyl group, a hexyl group or a heptyl group; an aryl group such as a phenyl group, a tolyl group, a xylyl group or a naphthyl group; an aralkyl group such as a benzyl group or a phenentyl group; a halogen-substituted alkyl group such as a chloromethyl group, a 3-chloropropyl group or a 3,3,3-trifluoropropyl group, and the like. In addition, here, R² is an alkenyl group, which may be, specifically, a vinyl group, an allyl group, a butenyl group, a pentenyl group, a hexenyl group, or a heptenyl group, and the like.

In one example, when the pressure-sensitive adhesive layer is a vertical orientation pressure-sensitive adhesive layer, the pressure-sensitive adhesive may have a surface energy of 16 mN/m or less. The lower limit of the surface energy may be, for example, 5 mN/m or more. When the pressure-sensitive adhesive layer is a horizontal orientation pressure-sensitive adhesive layer, the surface energy may be greater than 16 mN/m. The upper limit of the surface energy may be, for example, 50 mN/m or less. The surface energy can be measured using a drop shape analyzer (KRUSS' DSA100 product). Specifically, a process that deionized water with a known surface tension is dropped on the surface of the pressure-sensitive adhesive to obtain the contact angle is repeated 5 times, thereby obtaining the average value of the resulting five contact angle values, and equally a process that diiodomethane with a known surface tension is dropped thereon to obtain the contact angle is repeated 5 times, thereby obtaining the average value of the resulting five contact angle values. Then, the surface energy has been obtained by substituting a numerical value (Strom value) for the surface tension of the solvent by the Owens-Wendt-Rabel-Kaelble method using the obtained average values of the contact angles for deionized water and diiodomethane. The surface energy (γsurface) of the sample can be calculated by considering the dispersion force between nonpolar molecules and the interaction force between polar molecules (γsurface = γdispersion + γpolar), where the ratio of the polar term (γpolar) in the surface energy γsurface can be defined as polarity of the surface.

The upper substrate and the lower substrate of the liquid crystal cell may be attached by the pressure-sensitive adhesive layer. Specifically, the pressure-sensitive adhesive layer of the upper substrate and the spacer of the lower substrate may be attached. When the alignment film is formed on the spacer of the lower substrate, the region corresponding to the spacer of the alignment film may be attached to the pressure-sensitive adhesive layer of the upper substrate.

The liquid crystal region may be referred to as an active area. The liquid crystal compound in the liquid crystal region may switch orientation states by voltage application. As the liquid crystal compound, a liquid crystal compound capable of changing the alignment direction by application of an external action may be used. In this specification, the term "external action" may mean all external factors that may affect the behavior of materials included in the liquid crystal layer, for example, an external voltage, or the like. Therefore, the state without any external action may mean a state without application of an external voltage, or the like.

The type and physical properties of the liquid crystal compound may be appropriately selected in consideration of the purpose of the present application. In one example, the liquid crystal compound may be a nematic liquid crystal or a smectic liquid crystal. The nematic liquid crystal may mean a liquid crystal that rod-shaped liquid crystal molecules are arranged in parallel in the long-axis direction of the liquid crystal molecules although there is no regularity in their positions. The smectic liquid crystal may mean a liquid crystal that rod-shaped liquid crystal molecules are regularly arranged to form a layered structure and are arranged in parallel with regularity in the long axis direction. According to one example of the present application, the liquid crystal compound may be a nematic liquid crystal compound.

As the nematic liquid crystal compound, one having a clearing point of, for example, about 40°C or more, 50°C or more, 60°C or more, 70°C or more, 80°C or more, 90°C or more, 100°C or more, or about 110°C or more, or having a phase transition point (that is, a phase transition point to an isotropic phase on a nematic phase) in the above range, can be selected. In one example, the clearing point or phase transition point may be about 160°C or less, 150°C or less, or about 140°C or less.

The liquid crystal compound may be a non-reactive liquid crystal compound. The non-reactive liquid crystal compound may mean a liquid crystal compound having no polymerizable group. The polymerizable group may be exemplified by an acryloyl group, an acryloyloxy group, a methacryloyl group, a methacryloyloxy group, a carboxyl group, a hydroxy group, a vinyl group or an epoxy group, and the like, but is not limited thereto, and a functional group known as the polymerizable group may be included.

The liquid crystal compound may have dielectric constant anisotropy of a positive number or a negative number. The absolute value of the dielectric constant anisotropy of the liquid crystal compound may be appropriately selected in consideration of the purpose of the present application. The term "dielectric constant anisotropy (Δε)" may mean a difference (ε// - ε⊥) between the horizontal dielectric constant (ε//) and the vertical dielectric constant (ε⊥) of the liquid crystal. In this specification, the term horizontal dielectric constant (ε//) means a dielectric constant value measured along the direction of an electric field in a state where a voltage is applied so that the director of the liquid crystal and the direction of the electric field by the applied voltage are substantially horizontal, and the vertical dielectric constant (ε⊥) means a dielectric constant value measured along the direction of an electric field in a state where a voltage is applied so that the director of the liquid crystal and the direction of the electric field by the applied voltage are substantially perpendicular. The dielectric constant anisotropy of the liquid crystal compound may be in a range of 5 to 25.

The refractive index anisotropy (Δn) of the liquid crystal compound may be appropriately selected in consideration of the purpose of the present application. In this specification, the term "refractive index anisotropy" may mean a difference (nₑ-nₒ) between an extraordinary refractive index (nₑ) and an ordinary refractive index (nₒ) of a liquid crystal compound. The refractive index anisotropy of the liquid crystal compound may be, for example, 0.01 to 0.3. The refractive index anisotropy may be 0.01 or more, 0.05 or more, or 0.07 or more, and may be 0.3 or less, 0.2 or less, 0.15 or less, or 0.13 or less.

The liquid crystal layer (layer in which a liquid crystal compound is present) may further comprise a dichroic dye. When the liquid crystal layer comprises a dichroic dye, it is less affected by cell gap fluctuations during the bonding process of the outer substrate even if the liquid crystal cell comprises a pressure-sensitive adhesive layer, so that there is an advantage that the thickness of the intermediate layer for securing structural stability and uniformity of quality of the liquid crystal cell can be made relatively thin.

The dichroic dye may control light transmittance variable properties of the liquid crystal layer. In this specification, the term "dye" may mean a material capable of intensively absorbing and/or deforming light in at least a part of or all the ranges within a visible light region, for example, within a wavelength range of 400 nm to 700 nm, and the term "dichroic dye" may mean a material capable of anisotropic absorption of light in at least a part of or all the ranges of the visible light region.

The liquid crystal layer comprising the liquid crystal compound and the dichroic dye may be a GHLC layer (guest host liquid crystal layer). In this specification, the "GHLC layer (guest host liquid crystal layer)" may mean a functional layer that dichroic dyes are arranged together depending on arrangement of the liquid crystal compound to exhibit anisotropic light absorption characteristics with respect to an alignment direction of the dichroic dyes and the direction perpendicular to the alignment direction, respectively. For example, the dichroic dye is a substance whose absorption rate of light varies with a polarization direction, where if the absorption rate of light polarized in the long axis direction is large, it may be referred to as a p-type dye, and if the absorption rate of polarized light in the short axis direction is large, it may be referred to as an n-type dye. In one example, when a p-type dye is used, the polarized light vibrating in the long axis direction of the dye may be absorbed and the polarized light vibrating in the short axis direction of the dye may be less absorbed to be transmitted. Hereinafter, unless otherwise specified, the dichroic dye is assumed to be a p-type dye.

As the dichroic dye, for example, a known dye known to have a property capable of being aligned according to the orientation state of the liquid crystal compound by a so-called guest host effect may be selected and used. An example of such a dichroic dye includes azo dyes, anthraquinone dyes, methine dyes, azomethine dyes, merocyanine dyes, naphthoquinone dyes, tetrazine dyes, phenylene dyes, quarterrylene dyes, benzothiadiazole dyes, diketopyrrolopyrrole dyes, squaraine dyes or pyromethene dyes, and the like, but the dyes applicable in the present application are not limited thereto.

The dichroic ratio of the dichroic dye, that is, a value obtained by dividing the absorption of the polarized light parallel to the long axis direction of the dichroic dye by the absorption of the polarized light parallel to the direction perpendicular to the long axis direction may be 5 or more, 6 or more, or 7 or more. The dye may satisfy the dichroic ratio in at least a part of the wavelengths or any one wavelength within the wavelength range of the visible light region, for example, within the wavelength range of about 380 nm to 700 nm or about 400 nm to 700 nm. The upper limit of the dichroic ratio may be, for example, 20 or less, 18 or less, 16 or less, or 14 or less or so.

The content of the dichroic dye in the liquid crystal layer may be appropriately selected in consideration of the purpose of the present application. For example, the content of the dichroic dye in the liquid crystal layer may be 0.2 wt% or more. The content of the dichroic dye may specifically be 0.5 wt% or more, 1 wt% or more, 2 wt% or more, or 3 wt% or more. The upper limit of the content of the dichroic dye may be, for example, 10 wt% or less, 9 wt% or less, 8 wt% or less, 6 wt% or less, or 5 wt% or less. When the content of the dichroic dye in the liquid crystal layer is too small, it may be difficult to express the desired transmittance variable characteristics, and it may be insufficient to reduce the thickness of the intermediate layer for reducing the cell gap variation that may occur during the bonding process of the outer substrate. Meanwhile, when the content of the dichroic dye in the liquid crystal layer is too large, there is a risk of precipitation. Therefore, it may be advantageous that the content of the dichroic dye is within the above range.

The thickness of the liquid crystal layer is not particularly limited, and for example, the thickness of the liquid crystal layer may be about 0.01 µm or more, 0. 05µm or more, 0.1µm or more, 0.5µm or more, 1µm or more, 1.5µm or more, 2µm or more, 2.5µm or more, 3µm or more, 3.5µm or more, 4µm or more, 4.5µm or more, 5µm or more, 5.5µm or more, or 6µm or more. The upper limit of the thickness of the liquid crystal layer is not particularly limited, which may generally be about 30µm or less, 25µm or less, 20µm or less, or 15µm or less. The thickness of the liquid crystal layer may be determined according to the height of the spacer.

The liquid crystal layer may switch between a first orientation state and a second orientation state different from the first orientation state. The switching may be controlled through application of external energy such as a voltage. For example, the liquid crystal layer may be maintained in one of the first and second orientation states in a state where no voltage is applied, and then switched to another orientation state by voltage application.

In one example, the first orientation state may be a twist orientation state. That is, the liquid crystal layer may switch between twist orientation and an orientation state different from the twist orientation through the application of external energy.

In one example, the liquid crystal layer may switch between twist orientation and vertical orientation states. In one example, the liquid crystal layer may be in the vertical orientation state in a state where no voltage is applied, and may be in the twist orientation state in a state where a voltage is applied.

In this specification, the "vertical orientational state" is a state where the director of the liquid crystal compound in the liquid crystal layer is arranged substantially perpendicular to the plane of the liquid crystal layer, where for example, the angle formed by the director of the liquid crystal compound with respect to the plane of the liquid crystal layer may be, for example, in the range of about 80 degrees to 100 degrees or 85 degrees to 95 degrees, or may form approximately about 90 degrees.

In this specification, the "twisted orientational state" may mean a spiral structure in which the directors of the liquid crystal compounds in the liquid crystal layer are twisted along an imaginary spiral axis to form a layer and oriented. The twist orientational state may be implemented in a vertical, horizontal, or oblique orientational state. That is, the vertical twist orientational mode is a state where individual liquid crystal compounds are twisted along a spiral axis in a vertically oriented state to form a layer; the horizontal twist orientational mode is a state where individual liquid crystal compounds are twisted along a spiral axis in a horizontally oriented state to form a layer; and the oblique twist orientational mode is a state where individual liquid crystal compounds are twisted along a spiral axis in an obliquely oriented state to form a layer. According to the present application, the twist orientation state may be a twist orientation state of a horizontal orientation state.

In the twist orientation state, the ratio (d/p) of the thickness (d) to the pitch (p) of the liquid crystal layer may be 20 or less, and the lower limit may be 0.5 or more. When the ratio (d/p) of the thickness (d) to the pitch (p) in the twist orientation state is within the above range, the optical device may exhibit excellent light transmittance variable characteristics even in a state without any polarizer. In general, when the ratio d/p is 0.7 or more and less than 2.5, it may be called an STN (super twisted nematic) mode, and when the ratio d/p is 2.5 or more, it may be called an HTN (highly twisted nematic) driving mode.

The pitch (p) of the liquid crystal layer can be measured by a measurement method using a wedge cell, and specifically, can be measured by a method described in D. Podolskyy et al. Simple method for accurate measurements of the cholesteric pitch using a "stripe-wedge Grandjean-Cano cell (Liquid Crystals, Vol. 35, No. 7, July 2008, 789-791). The ratio (d/p) can be achieved by introducing an appropriate amount of a chiral dopant into the liquid crystal layer.

The liquid crystal layer may further comprise a chiral dopant, When the liquid crystal layer comprises a chiral agent, the twist orientation state may be implemented. The chiral agent (or chiral dopant) that can be included in the light crystal layer can be used without special limitation if it can induce a desired rotation (twisting) without deteriorating the liquid crystallinity, for example, the nematic regularity. The chiral agent for inducing rotation in the liquid crystal compound needs to include at least chirality in the molecular structure. The chiral agent may be exemplified by, for example, a compound having one or two or more asymmetric carbons, a compound having an asymmetric point on a heteroatom, such as a chiral amine or a chiral sulfoxide, or a compound having axially asymmetric and optically active sites such as cumulene or binaphthol. The chiral agent may be, for example, a low molecular weight compound having a molecular weight of 1,500 or less. As the chiral agent, commercially available chiral nematic liquid crystals, for example, chiral dopant liquid crystal S-811 commercially available from Merck Co., Ltd., or BASF's LC756 may also be used.

The application ratio of the chiral dopant is selected so that the desired ratio (d/p) can be achieved. In general, the content (wt%) of the chiral dopant may be calculated by an equation of 100/HTP (helical twisting power) × pitch (p) (nm). The HTP represents the strength of the twist of the chiral dopant, where the content of the chiral dopant may be determined in consideration of the desired pitch with reference to the above method.

The upper substrate of the liquid crystal cell may further comprise a first electrode layer (10b) between the first base layer (10a) and the pressure-sensitive adhesive layer (10c). The first electrode layer (10b) may contact the inner side surface of the first base layer (10a). The pressure-sensitive adhesive layer (10c) may contact the inner side surface of the first electrode layer (10b). The lower substrate of the liquid crystal cell may further comprise a second electrode layer (20b) between the second base layer (20a) and the spacers (20c). The second electrode layer (20b) may contact the inner side surface of the second base layer (20a). The spacers (20c) may contact the inner side surface of the second electrode layer (20b).

The first electrode layer and the second electrode layer may serve to provide application of an external action, for example, an electric field, so that the material included in the liquid crystal layer transmits or blocks incident light. In one example, the first electrode layer and/or the second electrode layer may comprise a conductive polymer, a conductive metal, a conductive nanowire, or a metal oxide such as ITO (indium tin oxide), and the like, but is not limited thereto. The first electrode layer and/or second electrode layer may be formed by, for example, depositing the conductive polymer, the conductive metal, the conductive nanowire, or the metal oxide such as ITO (indium tin oxide).

The lower substrate of the liquid crystal cell may further comprise an alignment film (20d). The alignment film (20d) may be present on the spacers (20c). That is, the top surface part and/or the side surface part of the spacers (20c) may contact the alignment film. A lower surface part of the spacers (20c) may contact the second electrode layer (20b). Since the pressure-sensitive adhesive layer included in the upper substrate may have liquid crystal orientation, the upper substrate may not comprise an alignment film. That is, the alignment film may not be included on the inner side surface of the first electrode layer (10b).

In this specification, the combination of the first base layer, the first electrode layer and the pressure-sensitive adhesive layer may be referred to as the upper substrate, and the combination of the second base layer, the second electrode layer, the spacer and the alignment film may be referred to as the lower substrate. In the liquid crystal cell, the upper substrate may not comprise a separate alignment film other than the pressure-sensitive adhesive layer, and the lower substrate may comprise the alignment film.

The alignment film and the liquid crystal layer may be in contact with each other. The alignment film may be a vertical alignment film or a horizontal alignment film. In this specification, the "horizontal alignment film" may mean a layer comprising an orientational material that imparts horizontal orientation force to a liquid crystal compound present in an adjacent liquid crystal layer. In this specification, the "vertical alignment film" may mean a layer comprising an orientational material that imparts vertical orientation force to a liquid crystal compound present in an adjacent liquid crystal layer. The adjacent liquid crystal compound may have a pretilt angle with respect to the vertical alignment film in the range of 80 degrees to 90 degrees, 85 degrees to 90 degrees, or about 87 degrees to 90 degrees, and the adjacent liquid crystal compound may have a pretilt angle with respect to the horizontal alignment film in the range of 0 degrees to 10 degrees, 0 degrees to 5 degrees or 0 degrees to 3 degrees. Unlike the pressure-sensitive adhesive layer, the alignment film may not have adhesive force for bonding the upper substrate and the lower substrate. In one example, the alignment film may have peel force close to zero regarding the first base layer in the state of the liquid crystal cell of Figure 4.

The alignment film may be a rubbing alignment film or a photo-alignment film. The orientation direction of the alignment film may be a rubbing direction in the case of a rubbing alignment film and a direction of polarized light to be irradiated in the case of a photo-alignment film, where such an orientation direction can be confirmed by a detection method using an absorption-type linear polarizer. Specifically, the orientation direction can be confirmed by disposing an absorption-type linear polarizer on one side of the liquid crystal layer in a state where the liquid crystal compound included in the liquid crystal layer is horizontally oriented, and measuring transmittance while rotating the polarizer at 360 degrees. When the side of the liquid crystal layer or the absorption-type linear polarizer is irradiated with light in the above state and simultaneously the luminance (transmittance) is measured from the other side, the transmittance tends to be low, if the absorption axis or transmission axis coincides with the orientation direction of the liquid crystal alignment film, where the orientation direction can be confirmed through simulation reflecting the refractive index anisotropy of the applied liquid crystal compound or the like. A method of confirming the orientation direction according to the mode of the liquid crystal layer is known, and in the present application, the orientation direction of the alignment film can be confirmed by such a known method.

The alignment film may comprise one or more selected from the group consisting of a material known to exhibit orientation ability by rubbing orientation such as a polyimide compound, a poly(vinyl alcohol) compound, a poly(amic acid) compound, a polystyrene compound, a polyamide compound and a polyoxyethylene compound, or a material known to exhibit orientation ability by light irradiation such as a polyimide compound, a polyamic acid compound, a polynorbornene compound, a phenylmaleimide copolymer compound, a polyvinylcinnamate compound, a polyazobenzene compound, a polyethyleneimide compound, a polyvinylalcohol compound, a polyamide compound, a polyethylene compound, a polystyrene compound, a polyphenylenephthalamide compound, a polyester compound, a CMPI (chloromethylated polyimide) compound, a PVCI (polyvinylcinnamate) compound and a polymethyl methacrylate compound, but is not limited thereto.

The spacer (20c) may maintain the gap between the upper substrate and the lower substrate. The liquid crystal layer may be present in a region where the spacer does not exist between the upper substrate and the lower substrate.

The spacer may be a patterned spacer. The spacer may have a column shape or a partition wall shape. The partition wall may partition the space between the lower substrate and the upper substrate into two or more spaces. In the region where the spacer does not exist, other films or other layers present in the lower part may be exposed. For example, the second electrode layer may be exposed in a region where the spacer does not exist. The alignment film may cover the spacer and the second electrode layer exposed in the region where the spacer is not present. In the liquid crystal cell in which the upper substrate and the lower substrate are bonded together, the alignment film present on the spacer of the lower substrate and the pressure-sensitive adhesive layer of the upper substrate may be in contact with each other.

The liquid crystal compound and the above-described additives, for example, the dichroic dye, the chiral agent, and the like may be present in the region between the upper substrate and the lower substrate where the spacer does not exist. The shape of the spacer is not particularly limited, which can be applied without limitation to have, for example, a circle, an ellipse, or other polygonal-shaped polyhedrons.

The spacer may comprise a curable resin. The type of the curable resin is not particularly limited, where for example, a thermosetting resin or a photo-curable resin, for example, an ultraviolet curable resin may be used. As the thermosetting resin, for example, a silicone resin, a silicon resin, a fran resin, a polyurethane resin, an epoxy resin, an amino resin, a phenol resin, a urea resin, a polyester resin or a melamine resin, and the like may be used, without being limited thereto. As the ultraviolet curable resin, typically an acrylic polymer, for example, a polyester acrylate polymer, a polystyrene acrylate polymer, an epoxy acrylate polymer, a polyurethane acrylate polymer or a polybutadiene acrylate polymer, a silicone acrylate polymer or an alkyl acrylate polymer, and the like may be used, without being limited thereto.

The spacer may be formed by a patterning process. For example, the spacer may be formed by a photolithography process. The photolithography process may comprise a process of applying a curable resin composition on a base layer or an electrode layer and then irradiating it with ultraviolet rays via a pattern mask. The pattern mask may be patterned into an ultraviolet transmitting region and an ultraviolet blocking region. The photolithography process may further comprise a process of washing the curable resin composition irradiated with ultraviolet rays. The region irradiated with ultraviolet rays is cured, and the region irradiated with no ultraviolet rays remains in a liquid phase, so that it is removed through the washing process, whereby it can be patterned into a partition wall shape. **In** the photolithography process, a release treatment may be performed on the pattern mask in order to easily separate the resin composition and the pattern mask after ultraviolet irradiation, or a release paper may also be placed between the layer of the resin composition and the pattern mask.

The width (line width), spacing (pitch), height (thickness) and area of the spacer may be appropriately selected within a range without impairing the purpose of the present application. For example, the width (line width) of the spacer may be in a range of 10µm to 500µm or in a range of 10µm to 50µm. The spacing (pitch) of the spacer may be in a range of 10µm to 1000µm or in a range of 100µm to 1000µm. The area of the spacer may be about 5% or more and may be 50% or less, relative to 100% of the total area of the second base layer. When the area of the spacer is within the above range, it may be advantageous to ensure excellent electro-optical properties while adequately securing attachment force between the upper substrate and the lower substrate. The height (thickness) of the spacer may range, for example, from 1µm to 30µm or from 3µm to 20µm.

The present application relates to an optical device. The optical device of the present application may sequentially comprise a first outer substrate, the liquid crystal cell, and a second outer substrate. At this instance, the upper substrate of the liquid crystal cell may be disposed close to the first outer substrate, and the lower substrate of the liquid crystal cell may be disposed close to the second outer substrate.

The first outer substrate and the second outer substrate may each independently be an inorganic substrate or a polymer substrate. The inorganic substrate is not particularly limited, and a well-known inorganic substrate may be used. In one example, a glass substrate having excellent light transmittance may be used as the inorganic substrate. As an example of the glass substrate, a soda lime glass substrate, a general tempered glass substrate, a borosilicate glass substrate or an alkali-free glass substrate, and the like may be used, without being limited thereto. As the polymer substrate, a cellulose film such as TAC (triacetyl cellulose) or DAC (diacetyl cellulose); a COP (cyclo olefin copolymer) film such as norbornene derivatives; an acrylic film such as PAR (polyacrylate) or PMMA (poly(methyl methacrylate); a PC (polycarbonate) film; a polyolefin film such as PE (polyethylene) or PP (polypropylene); a PVA (polyvinyl alcohol) film; a PI (polyimide) film; a sulfone-based film such as a PSF (polysulfone) film, a PPS (polyphenylsulfone) film or a PES (polyethersulfone) film; a PEEK (polyetheretherketon) film; a PEI (polyetherimide) film; a polyester-based film such as a PEN (polyethylenenaphthatlate) film or a PET (polyethyleneterephtalate) film; or a fluororesin film, and the like may be used, without being limited thereto. In each of the first outer substrate and the second outer substrate, a coating layer of: gold; silver; or a silicon compound such as silicon dioxide or silicon monoxide, or a functional layer such as an antireflection layer may also be present as needed.

In one example, the first outer substrate and/or the second outer substrate may be a glass substrate. The area of the first outer substrate and/or the second outer substrate may be larger than the area of the first base layer and/or the second base layer.

Each of the first outer substrate and the second outer substrate may have a thickness of about 0.3 mm or more. In another example, the thickness may be about 0.5 mm or more, 1 mm or more, 1.5 mm or more, or about 2 mm or more, and may also be about 10 mm or less, 9 mm or less, 8 mm or less, 7 mm or less, 6 mm or less, 5 mm or less, 4 mm or less, or about 3 mm or less.

The first outer substrate and the second outer substrate may be a flat substrate or may be a substrate having a curved surface shape. For example, the first outer substrate and the second outer substrate may be simultaneously flat substrates, simultaneously have a curved surface shape, or any one may be a flat substrate and the other may be a substrate having a curved surface shape. In addition, here, in the case of having the curved surface shape at the same time, the respective curvatures or curvature radii may be the same or different. In this specification, the curvature or curvature radius may be measured in a manner known in the industry, and for example, may be measured using a contactless apparatus such as a 2D profile laser sensor, a chromatic confocal line sensor or a 3D measuring confocal microscopy. The method of measuring the curvature or curvature radius using such an apparatus is known.

In one example, each of the first outer substrate and the second outer substrate may be a double-curved surface substrate. An autoclave process to be described below is performed under process conditions such as depressurization, pressurization, or high pressures, but uneven stress may occur due to the double-curved surface of the outer substrate, and particularly, in the depressurization condition, the delamination may occur when the upper substrate and the lower substrate have low adhesion. The flow of the liquid crystals by the delamination may cause pressing and overflow defects. In particular, the defects may easily occur in a region where liquid crystals are present between the upper substrate and the lower substrate because it has poorer adhesion. However, according to the present invention, the above defects can be solved by ensuring the width of the non-liquid crystal region in a predetermined range or more.

The optical device may further comprise at least one or more adhesive layers positioned between the first outer substrate and the liquid crystal cell and between the second outer substrate and the liquid crystal cell.

In one example, the optical device may further comprise a first adhesive layer between the first outer substrate and the liquid crystal cell, and a second adhesive layer between the second outer substrate and the liquid crystal cell. One surface of the first adhesive layer may directly contact the first outer substrate, and the other surface may directly contact the liquid crystal cell. One surface of the second adhesive layer may directly contact the second outer substrate, and the other surface may directly contact the liquid crystal cell. In this specification, the matter that A directly contacts B may mean a state where A and B are in direct contact without any intermediate between A and B.

In one example, the optical device may further comprise at least one or more intermediate layers positioned between the first outer substrate and the liquid crystal cell and between the second outer substrate and the liquid crystal cell. The intermediate layer may be, for example, a polarizer. In one example, the optical device may comprise a first polarizer positioned between the first outer substrate and the liquid crystal cell, and may comprise a second polarizer positioned between the second outer substrate and the liquid crystal cell. When the optical device further comprises the first polarizer and the second polarizer, it may further comprise the first adhesive layer between the first outer substrate and the first polarizer, the second adhesive layer between the first polarizer and the liquid crystal cell, and a third adhesive layer between the liquid crystal cell and the second polarizer, and a fourth adhesive layer between the second polarizer and the second outer substrate. At this instance, one surface of the first adhesive layer may directly contact the first outer substrate, and the other surface may directly contact the first polarizer. One surface of the second adhesive layer may directly contact the first polarizer, and the other surface may directly contact the liquid crystal cell. One surface of the third adhesive layer may directly contact the liquid crystal cell, and the other surface may directly contact the second polarizer. One surface of the fourth adhesive layer may directly contact the second polarizer, and the other surface may directly contact the second outer substrate.

In this specification, the term polarizer means a film, sheet or element having a polarization function. The polarizer is a functional element capable of extracting light vibrating in one direction from incident light vibrating in multiple directions.

The first polarizer and the second polarizer may each be an absorption type polarizer or a reflection type polarizer. In this specification, the absorption type polarizer means an element showing selective transmission and absorption characteristics with respect to incident light. The absorption type polarizer may transmit, for example, light vibrating in any one direction from incident light vibrating in multiple directions, and may absorb light vibrating in the other directions. In this specification, the reflection type polarizer means an element showing selective transmission and reflection characteristics with respect to incident light. The reflection type polarizer may transmit, for example, light vibrating in any one direction from incident light vibrating in multiple directions, and may reflect light vibrating in the other directions. According to one example of the present application, the polarizer may be an absorption type polarizer.

Each of the first polarizer and the second polarizer may be a linear polarizer. In this specification, the linear polarizer means a case in which the selectively transmitted light is linearly polarized light vibrating in any one direction, and the selectively absorbed or reflected light is linearly polarized light vibrating in a direction perpendicular to the vibration direction of the linearly polarized light. In the case of the absorption type linear polarizer, the light transmission axis and the light absorption axis may be perpendicular to each other. In the case of the reflection type linear polarizer, the light transmission axis and the light reflection axis may be perpendicular to each other.

In one example, the first polarizer and the second polarizer may each be a stretched polymer film dyed with iodine or an anisotropic dye. As the stretched polymer film, a PVA (poly(vinyl alcohol)) stretched film may be exemplified. In another example, each of the first polarizer and the second polarizer may be a guest-host type polarizer in which a liquid crystal polymerized in an oriented state is a host, and an anisotropic dye arranged according to the orientation of the liquid crystal is a guest. In another example, the first polarizer and the second polarizer may each be a thermotropic liquid crystal film or a lyotropic liquid crystal film.

A protective film, an antireflection film, a retardation film, a pressure-sensitive adhesive layer, an adhesive layer, a surface treatment layer, and the like may be additionally formed on one side or both sides of the first polarizer and the second polarizer, respectively. As a material of the protective film, for example, a thermoplastic resin having excellent transparency, mechanical strength, thermal stability, moisture barrier properties, or isotropic properties, and the like may be used. An example of such a resin may be exemplified by cellulose resins such as TAC (triacetyl cellulose), polyester resins, polyethersulfone resins, polysulfone resins, polycarbonate resins, polyamide resins, polyimide resins, polyolefin resins, (meth)acrylic resins, cyclic polyolefin resins such as norbornene resins, polyarylate resins, polystyrene resins, polyvinyl alcohol resins, or mixtures thereof, and the like. The retardation film may be, for example, a 1/4 wave plate or a 1/2 wave plate. The 1/4 wave plate may have an in-plane retardation value for light having a wavelength of 550 nm in a range of about 100 nm to 180 nm, 100 nm, or 150 nm. The 1/2 wave plate may have an in-plane retardation value for light having a wavelength of 550 nm in a range of about 200 nm to 300 nm or 250 nm to 300 nm. The retardation film may be, for example, a stretched polymer film or a liquid crystal polymerization film.

The first polarizer and the second polarizer may each have transmittance for light with a wavelength of 550 nm in a range of 40% to 50%. The transmittance may mean single transmittance of the polarizer for light with a wavelength of 550 nm. The single transmittance of the polarizer may be measured using, for example, a spectrometer (V7100, manufactured by Jasco). For example, after air is set as the base line in a state where the polarizer sample (without upper and lower protective films) is mounted on the device, and each transmittance is measured in a state where the axis of the polarizer sample is aligned vertically and horizontally with the axis of the reference polarizer, the single transmittance can be calculated.

When the first intermediate layer and the second intermediate layer include the first polarizer and the second polarizer, respectively, the light transmission axis of the first polarizer and the light transmission axis of the second polarizer may be perpendicular to each other. Specifically, the angle formed by the light transmission axis of the first polarizer and the light transmission axis of the second polarizer may be in a range of 80 degrees to 100 degrees or 85 degrees to 95 degrees. At this instance, the thicknesses of the second adhesive layer between the first intermediate layer and the liquid crystal cell and the third adhesive layer between the second intermediate layer and the liquid crystal cell may each be 380µm or less. When the light transmission axis of the first polarizer and the light transmission axis of the second polarizer are perpendicular to each other, light leakage may occur depending on the separation distance between the first polarizer and the second polarizer, but by setting the thicknesses of the second adhesive layer and the third adhesive layer within the above range, the separation distance between the first polarizer and the second polarizer is minimized, so that it is possible to secure structural safety of the liquid crystal cell while reducing the light leakage. The lower limits of the thicknesses of the second adhesive layer and the third adhesive layer may each be 10µm or more.

In one example, the storage elastic moduli of the first adhesive layer, the second adhesive layer, the third adhesive layer and/or the fourth adhesive layer may each be higher than the storage elastic modulus of the pressure-sensitive adhesive layer included in the liquid crystal cell. In addition, the loss elastic moduli of the first adhesive layer, the second adhesive layer, the third adhesive layer and/or the fourth adhesive layer may each be higher than the loss elastic modulus of the pressure-sensitive adhesive layer included in the liquid crystal cell. When the storage elastic moduli or loss elastic moduli of the first adhesive layer, the second adhesive layer, the third adhesive layer and/or the fourth adhesive layer are higher than the storage elastic modulus or loss elastic modulus of the pressure-sensitive adhesive layer, it is possible to reduce appearance defects even under durability conditions.

In one example, the first adhesive layer, the second adhesive layer, the third adhesive layer and/or the fourth adhesive layer may also have a storage elastic modulus at a temperature of 25°C and a frequency of 1 Hz in a range of 1 MPa to 100 MPa. The storage elastic modulus may be specifically, 3 MPa or more, and may be 80 MPa or less, 60 MPa or less, 40 MPa or less, 20 MPa or less, or 10 MPa or less. In one example, the first adhesive layer, the second adhesive layer, the third adhesive layer and/or the fourth adhesive layer may each have a loss elastic modulus at a temperature of 25°C and a frequency of 1 Hz in a range of 1 MPa to 100 MPa. The loss elastic modulus may be, specifically, 1 MPa or more, and may be 80 MPa or less, 60 MPa or less, 40 MPa or less, 20 MPa or less, or 10 MPa or less. The storage elastic modulus of the first adhesive layer, the second adhesive layer, the third adhesive layer and/or the fourth adhesive layer may each have a higher value than the loss elastic modulus.

As one example, the first adhesive layer, the second adhesive layer, the third adhesive layer and/or the fourth adhesive layer may have Young's modulus (E) in a range of 0.1 MPa to 100 MPa. As another example, the Young's modulus (E) of the first adhesive layer, the second adhesive layer, the third adhesive layer and/or the fourth adhesive layer may be 0.2 MPa or more, 0.4 MPa or more, 0.6 MPa or more, 0.8 MPa or more, 1 MPa or more, 5 MPa or more, or about 10 MPa or more, and may be about 95 MPa or less, 80 MPa or less, 75 MPa or less, 70 MPa or less, 65 MPa or less, 60 MPa or less, 55 MPa or less, or about 50 MPa or less. The Young's modulus (E), for example, can be measured in the manner specified in ASTM D882, and can be measured using the equipment that can cut the film in the form provided by the relevant standard and measure the stress-strain curve (can measure the force and length simultaneously), for example, a UTM (universal testing machine). When the Young's moduli of the adhesive layers included in the optical device are within the above range, it may be more advantageous to ensure excellent durability of the optical device. When the adhesive layer is a laminate of at least two or more sub-adhesive layers, each of the sub-adhesive layers may satisfy the above Young's modulus range.

As one example, the first adhesive layer, the second adhesive layer, the third adhesive layer and/or the fourth adhesive layer may each have a coefficient of thermal expansion of 2,000 ppm/K or less. In another example, the coefficient of thermal expansion may be about 1,900 ppm/K or less, 1,700 ppm/K or less, 1,600 ppm/K or less, or about 1,500 ppm/K or less, or may be about 10 ppm/K or more, 20 ppm/K or more, 30 ppm/K or more, 40 ppm/K or more, 50 ppm/K or more, 60 ppm/K or more, 70 ppm/K or more, 80 ppm/K or more, 90 ppm/K or more, 100 ppm/K or more, 200 ppm/K or more, 300 ppm/K or more, 400 ppm/K or more, 500 ppm/K or more, 600 ppm/K or more, 700 ppm/K or more, or about 800 ppm/K or more. The coefficient of thermal expansion of the adhesive layer can be measured, for example, according to the regulations of ASTM D696, where the coefficient of thermal expansion can be calculated by cutting it in the form provided by the relevant standard, and measuring the change in length per unit temperature, and can be measured by a known method such as the TMA (thermomechanic analysis). When the coefficients of thermal expansion of the adhesive layers included in the optical device are within the above range, it may be more advantageous to ensure excellent durability of the optical device. When the intermediate layer is a laminate of at least two or more sub-adhesive layers, each sub-adhesive layer may satisfy the range of the thermal expansion coefficient.

The first adhesive layer, the second adhesive layer, the third adhesive layer and/or the fourth adhesive layer may each be a thermoplastic polyurethane (TPU) adhesive layer, a polyamide adhesive layer, a polyester adhesive layer, an EVA (ethylene vinyl acetate) adhesive layer, an acrylic adhesive layer, a silicone adhesive layer or a polyolefin adhesive layer. According to one example of the present application, the first adhesive layer, the second adhesive layer, the third adhesive layer and the fourth adhesive layer may each be a thermoplastic polyurethane adhesive layer.

As one example, the sum of the total thicknesses of the adhesive layers included in the optical device may be 200 µm or more. The sum of the total thicknesses of the adhesive layers may mean the sum of the thicknesses of all adhesive layers included in the optical device. As one example, when the optical device comprises the first adhesive layer and the second adhesive layer, it may mean the sum of the thicknesses of the adhesive layers. In another example, when the optical device comprises the first adhesive layer, the second adhesive layer, the third adhesive layer, and the fourth adhesive layer, it may mean the sum of the thicknesses of the adhesives. When the total thickness of the adhesive layers is within the above range, it is possible to secure structural stability and uniform appearance characteristics of the optical device by minimizing defects in the bonding process of the outer substrate. The sum of the total thicknesses of the adhesive layer may be, specifically, 500 µm or more, 1,000 µm or more, 1,500 µm or more, or 2,000 µm or more. The sum of the total thicknesses of the adhesive layers may be, for example, about 6,000 µm or less, 5,000 µm or less, 4,000 µm or less, or 3,000 µm or less. If the total thickness of the adhesive layers is too thick, electro-optical properties such as transmittance characteristics of the optical device may be deteriorated, so that it may be advantageous that the total thickness is within the above range.

Each of the first adhesive layer, the second adhesive layer, the third adhesive layer and/or the fourth adhesive layer may have a single-layer structure of one adhesive layer, or may be a laminate of two or more sub-adhesive layers. The thickness and number of sub adhesive layers may be controlled in consideration of the desired thickness of the intermediate layer. In one example, the thickness of one adhesive layer with a single-layer structure or subintermediate layer may be in the range of 100 µm to 500 µm, or the range of 300 µm to 400 µm.

The optical device may further comprise an outer layer surrounding the side surfaces of the liquid crystal cell. In the optical device, the top area of the liquid crystal cell may be smaller than the top area of the first outer substrate or the second outer substrate. Also, the top area of the liquid crystal cell may be smaller than the top areas of the first to fourth adhesive layers included in the optical device. Also, the top area of the liquid crystal cell may be smaller than the top area of the first to second intermediate layers included in the optical device.

In one example, the liquid crystal cell may be encapsulated by the first to fourth adhesive layers and the outer layer. In the present application, the term encapsulation may mean covering the entire surface of the liquid crystal cell with the adhesive layers and the outer layer. Depending on the desired structure, it is possible to implement the encapsulation structure, for example, by a method of compressing a laminate comprising a first outer substrate, a first adhesive layer, a first polarizer, a second adhesive layer, a liquid crystal cell, a third adhesive layer, a second polarizer, a fourth adhesive layer, and a second outer substrate sequentially, and an outer layer surrounding the side surfaces of the liquid crystal cell in a vacuum state. Durability and weather resistance of the optical device are greatly improved by such an encapsulation structure, and as a result, it can be stably applied to outdoor applications such as sunroofs.

The outer layer may comprise, for example, a thermoplastic polyurethane (TPU) adhesive, a polyamide adhesive, a polyester adhesive, an EVA (ethylene vinyl acetate) adhesive, an acrylic adhesive, a silicone adhesive, or a polyolefin adhesive. In one example, the outer layer may be formed of the same material as that of the first to fourth adhesive layers. As for the physical properties of the outer layer, the physical properties described in the first adhesive layer and the second adhesive layer may be equally applied.

The present application also relates to a method for manufacturing an optical device.

In one example, when the optical device does not comprise a polarizer as an intermediate layer, the manufacturing method of the optical device may comprise steps of preparing a laminate sequentially comprising a first outer substrate, a first adhesive layer, a liquid crystal cell, a second adhesive layer, and a second outer substrate, and comprising an outer layer surrounding the side surfaces of the liquid crystal cell, and performing an autoclave treatment on the laminate.

In another example, when the optical device comprises a first polarizer and a second polarizer as an intermediate layer, it may comprise steps of preparing a laminate sequentially comprising a first outer substrate, a first adhesive layer, a first polarizer, a second adhesive layer, a liquid crystal cell, a third adhesive layer, a second polarizer, a fourth adhesive layer, and a second outer substrate, and comprising an outer substrate surrounding the side surfaces of the liquid crystal cell, and performing an autoclave treatment on the laminate.

Unless otherwise specified in the manufacturing method of the optical device, the contents described in the optical device may be equally applied.

When the optical device further comprises other elements in addition to the liquid crystal cell and the polarizer, the laminate may further comprise other elements in addition to the liquid crystal cell and the polarizer at a desired location.

The autoclave process may be performed by heating and/or pressurizing the laminate formed after the laminating step.

The conditions of the autoclave process are not particularly limited, and it may be performed under an appropriate temperature and pressure, for example, depending on the type of the applied intermediate layers. The temperature of a typical autoclave process is about 80°C or more, 90°C or more, 100°C or more, and the pressure is 2 atm or more, without being limited thereto. The upper limit of the process temperature may be about 200°C or less, 190°C or less, 180°C or less, or 170°C or less or so, and the upper limit of the process pressure may be about 10 atm or less, 9 atm or less, 8 atm or less, 7 atm or less, or 6 atm or less or so.

Such an optical device can be used for various applications, and for example, can be used for eyewear such as sunglasses or AR (augmented reality) or VR (virtual reality) eyewear, an outer wall of a building or a sunroof for a vehicle, and the like. In one example, the optical device itself may be a sunroof for a vehicle. For example, in an automobile including an auto body in which at least one opening is formed, the optical device or the sunroof for a vehicle attached to the opening can be mounted and used.

### [Effects of Invention]

The liquid crystal cell and optical device of the present application can properly maintain a cell gap of a liquid crystal cell, have excellent adhesion between an upper substrate and a lower substrate, and solve the pressing and liquid crystal overflow problems capable of occurring during the bonding process of an outer substrate due to the delamination capable of occurring in the post-electrode process.

### [Brief Description of Drawings]

Figure 1 exemplarily shows a liquid crystal cell of the present application.
Figure 2 exemplarily shows a liquid crystal cell of the present application.
Figure 3 exemplarily shows a liquid crystal cell of the present application.
Figure 4 exemplarily shows a liquid crystal cell of the present application.
Figure 5 is an image obtained by observing pressing and overflow defects due to delamination and after bonding in Example 1.
Figure 6 is an image obtained by observing pressing and overflow defects due to delamination in Comparative Example 3.

### [Mode for Invention]

Hereinafter, the present application is specifically described through examples, but the scope of the present application is not limited by the following examples.

### Example 1.

As a first base layer, a polycarbonate film (Keiwa) having a thickness of about 100 µm and a width × height area of 900 mm × 600 mm was prepared. A first electrode layer was formed by depositing ITO (indium-tin-oxide) to a thickness of 50nm on the first base layer. A pressure-sensitive adhesive composition (KR-3700, Shin-Etsu) was bar-coated on the first electrode layer, and then dried at about 150°C for about 5 minutes to form a pressure-sensitive adhesive layer having a thickness of about 10 µm. The storage elastic modulus of the pressure-sensitive adhesive layer at a temperature of 25°C and a frequency of 1 Hz was about 754,500 Pa, and the loss elastic modulus at a temperature of 25°C and a frequency of 1 Hz was about 906,687 Pa. The combination of the first base layer, the first electrode layer and the pressure-sensitive adhesive layer is referred to as an upper substrate.

As a second base layer, a polycarbonate film (Keiwa) having a thickness of about 100µm and a width × height area of 900 mm × 600 mm was prepared. A second electrode layer was formed by depositing ITO (indium-tin-oxide) to a thickness of 50nm on the second base layer. An acrylic resin composition (KAD-03, Minutatec) was coated on the second electrode layer, and then honeycomb spacers were formed by a photolithography method. The regular hexagon (closed island shape) constituting a honeycomb has a pitch of about 350 µm, a height of about 6 µm, and a line width of about 30 µm. A vertical alignment film (Nissan, 5661) was coated to a thickness of about 300 nm on the spacers, and then rubbed in one direction. The combination of the second base layer, the second electrode layer, the spacers, and the vertical alignment film is referred to as a lower substrate.

A liquid crystal layer having a width (length in the vertical direction) of 560 mm was formed by coating a liquid crystal composition on the vertical alignment film of the lower substrate. The widths of both side edges of the lower substrate without coating any liquid crystal composition were each 20 mm. Next, a liquid crystal cell was manufactured by laminating the pressure-sensitive adhesive layer of the upper substrate to face the liquid crystal layer. At this instance, as the upper substrate and the lower substrate were laminated alternately, the width of the liquid crystal region at the center between the upper substrate and the lower substrate was 560 mm, the widths of the non-liquid crystal regions between the upper substrate and the lower substrate, on both side surfaces of the liquid crystal region, were each 10 mm, and the widths of the region where only the upper substrate was exposed and the region where only the lower substrate was exposed at both ends of the liquid crystal cell were each 10 mm. An electrode tape made of a fabric carbon material having a width of about 4 mm to 6 mm was attached to each of the region where the upper substrate was exposed and the region where the lower substrate was exposed at both ends of the liquid crystal cell.

The non-liquid crystal region extended in the longitudinal direction of the lower substrate (second base layer), the non-liquid crystal region was located on both sides of the liquid crystal region, and the non-liquid crystal regions on both sides were parallel to each other. The liquid crystal composition comprised a liquid crystal compound (JNC, SHN-5011XX) and a chiral dopant (HCCH, S811), and the pitch (p) of the liquid crystal layer was about 20 µm. The liquid crystal cell is an RTN (reverse twisted nematic) mode liquid crystal cell in an initial vertical orientation state.

### Example 2.

An upper substrate and a lower substrate were manufactured in the same manner as in Example 1. Next, the liquid crystal composition was coated on the vertical alignment film of the lower substrate to form a liquid crystal layer having a width (length in the vertical direction) of 570 mm. The widths of both side edges of the lower substrate without coating any liquid crystal composition were each 15 mm. Next, a liquid crystal cell was manufactured by laminating the pressure-sensitive adhesive layer of the upper substrate to face the liquid crystal layer. At this instance, as the upper substrate and the lower substrate were laminated alternately, the width of the liquid crystal region at the center between the upper substrate and the lower substrate was 570 mm, the widths of the non-liquid crystal regions between the upper substrate and the lower substrate, on both sides of the liquid crystal region were each 5 mm, and the widths of the region where only the upper substrate was exposed and the region where only the lower substrate was exposed at both ends of the liquid crystal cell were each 10 mm. A liquid crystal cell was manufactured in the same manner as in Example 1, except for the above matters. The non-liquid crystal region extended in the longitudinal direction of the lower substrate (second base layer), the non-liquid crystal regions were located on both sides of the liquid crystal region, and the non-liquid crystal regions on both sides were parallel to each other. The liquid crystal composition comprised a liquid crystal compound (JNC, SHN-5011XX) and a chiral dopant (HCCH, S811), and the pitch (p) of the liquid crystal layer was about 20µm. The liquid crystal cell is an RTN mode liquid crystal cell in an initial vertical orientation state.

### Example 3.

An upper substrate and a lower substrate were manufactured in the same manner as in Example 1. Next, the liquid crystal composition was coated on the vertical alignment film of the lower substrate to form a liquid crystal layer having a width (length in the vertical direction) of 580 mm. The width of one side edge of the lower substrate without coating any liquid crystal composition was 20 mm. Next, a liquid crystal cell was manufactured by laminating the pressure-sensitive adhesive layer of the upper substrate to face the liquid crystal layer. At this instance, as the upper substrate and the lower substrate were laminated alternately, the width of the liquid crystal region between the upper substrate and the lower substrate was 580 mm, the width of the non-liquid crystal regions between the upper substrate and the lower substrate, on one side of the liquid crystal region was 10 mm, and the widths of the region where only the upper substrate was exposed and the region where only the lower substrate was exposed at both ends of the liquid crystal cell were each 10 mm. The non-liquid crystal region extended in the longitudinal direction of the lower substrate, and the non-liquid crystal region was located on one side of the liquid crystal region. The liquid crystal composition comprised a liquid crystal compound (JNC, SHN-5011XX) and a chiral dopant (HCCH, S811), and the pitch (p) of the liquid crystal layer was about 20µm. The liquid crystal cell is an RTN mode liquid crystal cell in an initial vertical orientation state.

### Example 4

An upper substrate and a lower substrate were manufactured in the same manner as in Example 1. The liquid crystal composition was coated on the vertical alignment film of the lower substrate to form a liquid crystal layer having a width (length in the vertical direction) of 180 mm. The widths of both side edges of the lower substrate without coating any liquid crystal composition were each 210 mm. Next, a liquid crystal cell was manufactured by laminating the pressure-sensitive adhesive layer of the upper substrate to face the liquid crystal layer. At this instance, as the upper substrate and the lower substrate were laminated alternately, the width of the liquid crystal region at the center between the upper substrate and the lower substrate was 180 mm, the widths of the non-liquid crystal regions between the upper substrate and the lower substrate, on both sides of the liquid crystal region were each 200 mm, and the widths of the region where only the upper substrate was exposed and the region where only the lower substrate was exposed at both ends of the liquid crystal cell were each 10 mm. A liquid crystal cell was manufactured in the same manner as in Example 1, except for the above matters. The non-liquid crystal region extended in the longitudinal direction of the lower substrate (second base layer), the non-liquid crystal regions were located on both sides of the liquid crystal region, and the non-liquid crystal regions on both sides were parallel to each other. The liquid crystal composition comprised a liquid crystal compound (JNC, SHN-5011XX) and a chiral dopant (HCCH, S811), and the pitch (p) of the liquid crystal layer was about 20µm. The liquid crystal cell is an RTN mode liquid crystal cell in an initial vertical orientation state.

### Comparative Example 1.

An upper substrate and a lower substrate were manufactured in the same manner as in Example 1. Next, the liquid crystal composition was coated on the vertical alignment film of the lower substrate to form a liquid crystal layer having a width (length in the vertical direction) of 576 mm. The widths of both side edges of the lower substrate without coating any liquid crystal composition were each 12 mm. Next, a liquid crystal cell was manufactured by laminating the pressure-sensitive adhesive layer of the upper substrate to face the liquid crystal layer. At this instance, as the upper substrate and the lower substrate were laminated alternately, the width of the liquid crystal region at the center between the upper substrate and the lower substrate was 576 mm, the widths of the non-liquid crystal regions between the upper substrate and the lower substrate, on both sides of the liquid crystal region were each 2 mm, and the widths of the region where only the upper substrate was exposed and the region where only the lower substrate was exposed at both ends of the liquid crystal cell were each 10 mm. The non-liquid crystal region extended in the longitudinal direction of the lower substrate, the non-liquid crystal regions were located on both sides of the liquid crystal region, and the non-liquid crystal regions on both sides were parallel to each other. The liquid crystal composition comprised a liquid crystal compound (JNC, SHN-5011XX) and a chiral dopant (HCCH, S811), and the pitch (p) of the liquid crystal layer was about 20µm. The liquid crystal cell is an RTN mode liquid crystal cell in an initial vertical orientation state.

### Comparative Example 2.

An upper substrate and a lower substrate were manufactured in the same manner as in Example 1. Next, the liquid crystal composition was coated on the vertical alignment film of the lower substrate to form a liquid crystal layer having a width (length in the vertical direction) of 580 mm. The widths of both side edges of the lower substrate without coating any liquid crystal composition were each 10 mm. Next, a liquid crystal cell was manufactured by laminating the pressure-sensitive adhesive layer of the upper substrate to face the liquid crystal layer. At this instance, as the upper substrate and the lower substrate were laminated alternately, the width of the liquid crystal region at the center between the upper substrate and the lower substrate was 580 mm, the non-liquid crystal region was not formed between the upper substrate and the lower substrate, and the widths of the region where only the upper substrate was exposed and the region where only the lower substrate was exposed at both ends of the liquid crystal cell were each 10 mm. A liquid crystal cell was manufactured in the same manner as in Example 1, except for the above matters.

### Example 5.

A laminate sequentially comprising a first outer substrate, a first adhesive layer, a first polarizer, a second adhesive layer, the liquid crystal cell of Example 1, a third adhesive layer, a second polarizer, a fourth adhesive layer, and a second outer substrate, and comprising an outer layer surrounding the side surfaces of the liquid crystal cell was prepared. At this instance, it was laminated so that the first base layer of the liquid crystal cell was disposed close to the first outer substrate, and the second base layer of the liquid crystal cell was disposed close to the second outer substrate. Compared to the first outer substrate, the second outer substrate was disposed in the gravitational force direction.

The first polarizer and the second polarizer were each a PVA-based polarizer, and disposed so that the light transmission axis of the first polarizer and the light transmission axis of the second polarizer formed about 90 degrees. As each of the first outer substrate and the second outer substrate, a double-curved glass having a thickness of about 3 mm and an area of width × length = 1100 mm × 800 mm was used. As each of the first adhesive layer, the second adhesive layer, the third adhesive layer, and the fourth adhesive layer, a TPU layer (Argotec) having a thickness of about 380 µm was used. As the outer layer, a TPU layer (Argotec) having a thickness of 380 µm was used. The storage elastic modulus of the TPU layer (Argotec) at 25°C and 1Hz was 3,357,730 Pa, and the loss elastic modulus at 25°C and 1Hz was 1,485,510 Pa. An optical device was manufactured by performing an autoclave process on the laminate at a temperature of about 110°C and a pressure of about 2 atm.

### Example 6.

An optical device was manufactured in the same method as in Example 5, except that the liquid crystal cell manufactured in Example 2 was used instead of the liquid crystal cell manufactured in Example 1.

### Example 7.

An optical device was manufactured in the same method as in Example 5, except that the liquid crystal cell manufactured in Example 3 was used instead of the liquid crystal cell manufactured in Example 1.

### Example 8.

An optical device was manufactured in the same method as in Example 5, except that the liquid crystal cell manufactured in Example 4 was used instead of the liquid crystal cell manufactured in Example 1.

### Comparative Example 3.

An optical device was manufactured in the same method as in Example 5, except that the liquid crystal cell manufactured in Comparative Example 1 was used instead of the liquid crystal cell manufactured in Example 1.

### Comparative Example 4.

An optical device was manufactured in the same method as in Example 5, except that the liquid crystal cell manufactured in Comparative Example 2 was used instead of the liquid crystal cell manufactured in Example 1.

### Evaluation Example 1. Evaluation of pressing and overflow defects due to delamination

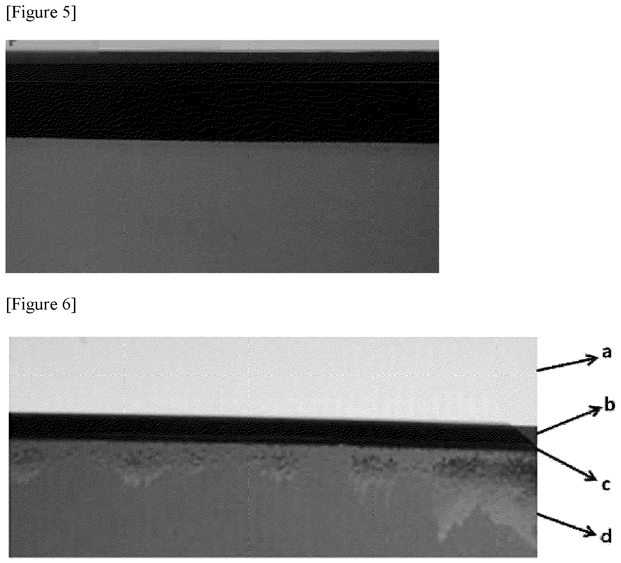

For the optical devices of Examples 5 to 8 and Comparative Examples 3 to 4, pressing and overflow defects after bonding due to delamination were evaluated. Specifically, before bonding the liquid crystal cell to the outer substrate, a voltage was applied in a cross-pole state, and then uneven transmittance was observed in the corresponding region. Figure 5 is an image obtained by observing pressing and overflow defects of the optical device of Example 1, and Figure 6 is an image obtained by observing pressing and overflow defects of the optical device of Comparative Example 3. In Figure 6, a is the region of the outer substrate and adhesive layer, b is the region of the first polarizer, the first base layer, the electrode tape and the second polarizer, c is the non-liquid crystal region, and d is the region of the first polarizer, the first base layer, the liquid crystal layer, the second base layer, and the second polarizer. As shown in Figure 6, in Comparative Example 3, liquid crystal flow occurred due to delamination, and in specific regions, transmittance unevenness of dark regions where the cell gap was not maintained due to lack of liquid crystals and bright regions where the cell gap was increased, was observed. Comparative Example 4 also showed similar results to Comparative Example 3. On the other hand, in Example 5, as shown in Figure 5, the above defects were not observed. Examples 6 to 8 also showed similar results to Example 5.

**[Table 1]**

| | | Width of non-liquid crystal region (mm) | Delamination defects | Pressing and overflow defects after bonding |
|---|---|---|---|---|
| Example | 5 | 10 (both sides) | Good | Good |
| | 6 | 5 (both sides) | Good | Good |
| | 7 | 10 (one side) | Good | Good |
| | 8 | 200 (both sides) | Good | Good |
| Comparative Example | 3 | 2 (both sides) | Bad | Bad |
| | 4 | 0 | Bad | Bad |

### [Explanation of Reference Numerals]

100: liquid crystal region, 200a, 200b, 200: non-liquid crystal region, 300a, 300b, 300: region where only any one of upper substrate and lower substrate exists, 400a, 400b, 400: conductive tape, 10a: second base layer, 10b: first electrode layer, 10c: pressure-sensitive adhesive layer, 30: liquid crystal compound, 20a: second base layer, 20b: second electrode layer, 20c: spacer, 20d: alignment film

## Claims

1. A liquid crystal cell comprising
an upper substrate including a first base layer and a pressure-sensitive adhesive layer, and
a lower substrate including a second base layer and spacers, wherein
the region between the upper substrate and the lower substrate is divided into a liquid crystal region containing a liquid crystal compound and non-liquid crystal regions containing no liquid crystal compound, and
the non-liquid crystal region has a width W1 of 4 mm or more.

2. The liquid crystal cell according to claim 1, wherein the non-liquid crystal region has a line shape extending in a first direction, and the first direction is a longitudinal direction of the first base layer or the second base layer.

3. The liquid crystal cell according to claim 1, wherein the non-liquid crystal regions are located on a first side surface and a second side surface of the liquid crystal region, and the non-liquid crystal region located on the first side surface of the liquid crystal region and the non-liquid crystal region located on the second side surface of the liquid crystal region do not contact each other.

4. The liquid crystal cell according to claim 3, wherein the non-liquid crystal region located on the first side surface of the liquid crystal region and the non-liquid crystal region located on the second side surface of the liquid crystal region are parallel to each other.

5. The liquid crystal cell according to claim 1, wherein the non-liquid crystal region is located only on any one of side surfaces of the liquid crystal region.

6. The liquid crystal cell according to claim 1, wherein a region where only any one of the upper substrate and the lower substrate is present exists on the side surface of the non-liquid crystal region, and a conductive tape extending in a first direction is formed on any one substrate.

7. The liquid crystal cell according to claim 1, wherein the liquid crystal compound in the liquid crystal region switches orientation states by voltage application.

8. The liquid crystal cell according to claim 1, wherein the upper substrate further comprises a first electrode layer between the first base layer and the pressure-sensitive adhesive layer, and the lower substrate further comprises a second electrode layer between the second base layer and the spacers.

9. The liquid crystal cell according to claim 8, wherein the upper substrate does not comprise an alignment film, and the lower substrate further comprises an alignment film.

10. An optical device comprising a first outer substrate, the liquid crystal cell of claim 1, and a second outer substrate sequentially.

11. The optical device according to claim 10, wherein the first outer substrate and the second outer substrate are each a glass substrate.

12. The optical device according to claim 10, further comprising a first adhesive layer between the first outer substrate and the liquid crystal cell, and a second adhesive layer between the second outer substrate and the liquid crystal cell.

13. The optical device according to claim 12, wherein the first adhesive layer and the second adhesive layer are each a thermoplastic polyurethane adhesive layer, a polyamide adhesive layer, a polyester adhesive layer, an ethylene vinyl acetate adhesive layer, an acrylic adhesive layer, a silicone adhesive layer, or a polyolefin adhesive layer.

14. An automobile comprising an auto body in which one or more openings are formed; and the optical device of claim 10 mounted in the openings.
